(19) Europäisches Patentamt
European Patent Office
Office européen des brevets

(11) EP 4 813 218 A2

(12) EUROPEAN PATENT APPLICATION

(43) Date of publication:
**30.09.2026 Bulletin 2026/40**

(21) Application number: **26198106.2**

(22) Date of filing: **09.06.2017**

(51) International Patent Classification (IPC):
***A23L 27/30*** *(2016.01)*

(52) Cooperative Patent Classification (CPC):
**A23L 27/88; A23L 2/60; A23L 27/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 US 201662357362 P**

(62) Document number(s) of the earlier application(s) in accordance with Art. 76 EPC:
**25176568.1 / 4 581 939**
**17729117.6 / 3 478 090**

(71) Applicant: **Firmenich SA**
**1242 Satigny (CH)**

(72) Inventors:
- **DELATTRE, Maxime**
  **1242 Satigny (CH)**
- **DI PIETRO, Angela**
  **1242 Satigny (CH)**
- **CAYEUX, Isabelle**
  **1242 Satigny (CH)**
- **FREROT, Eric**
  **1242 Satigny (CH)**

(74) Representative: **Strych, Sebastian**
**Mitscherlich PartmbB**
**Karlstraße 7**
**80333 München (DE)**

Remarks:
This application was filed on 12-08-2026 as a divisional application to the application mentioned under INID code 62.

# (54) FLAVORED FOOD AND BEVERAGE PRODUCTS

(57) Use of hesperetin Dihydrochalcone in an amount of 2 to 20 ppm by weight of the total weight of a beverage or food product for enhancing the sweetness of a sweetener in the product and/or the overall flavor profile of the product and/or the overall mouthfeel of the product. Also provided here is a beverage or food product comprising Hesperetin Dihydrochalcone in an amount of from 2 to 50 ppm, by weight, of the total weight of the product.

Hesperetin DHC in tropical JUCO
Overall flavor
Sweetness
Acidity
Bitterness
Astringency
Thickness
Syrupy
Body/Volume
Watery
Off-notes
Long-lasting (sweet)
5
4
3
2
1
0
CONTROL
4ppm
8ppm

Figure 1



Processed by Luminess, 75001 PARIS (FR)

**Description**

## FIELD

The inventions described herein have use in foods and beverages, particularly those that rely on sweeteners and other flavor components and more particularly those that might rely on compounds and ingredients.

## BACKGROUND

Natural products and ingredients found in nature are desirable for use in and as flavors and food ingredients. Compounds that can enhance, confer or modify the perception of the sweetness of a product are also desirable to attain low caloric foods and beverages that have the same perception of sweetness that a comparable product has with more high caloric sweeteners.

## SUMMARY

Provided herein is a method of enhancing the sweetness of a sweetener in a beverage or food product comprising adding Hesperetin Dihydrochalcone to the product in an amount of 2 ppm to 40 ppm by weight of the total weight of the product. Also provided herein is a beverage or food product comprising Hesperetin Dihydrochalcone in an amount of from 2 to 50 ppm, by weight, of the total weight of the product, and a sweetener.

## BRIEF DESCRIPTION OF THE DRAWINGS

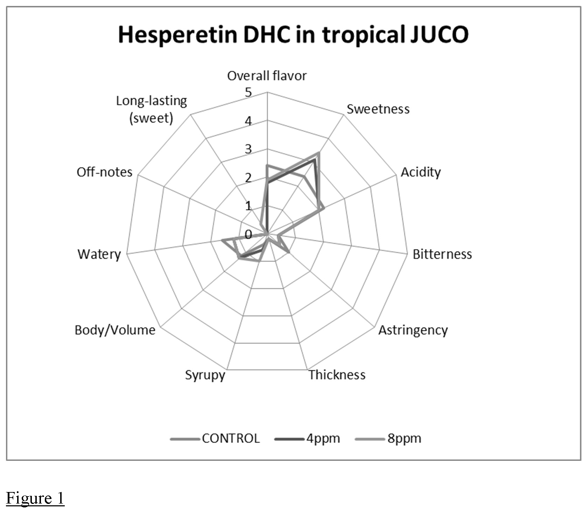

**Figure 1** shows the effect of Hesperetin Dihydrochalcone dosed at 4 ppm and 8 ppm in a tropical juice

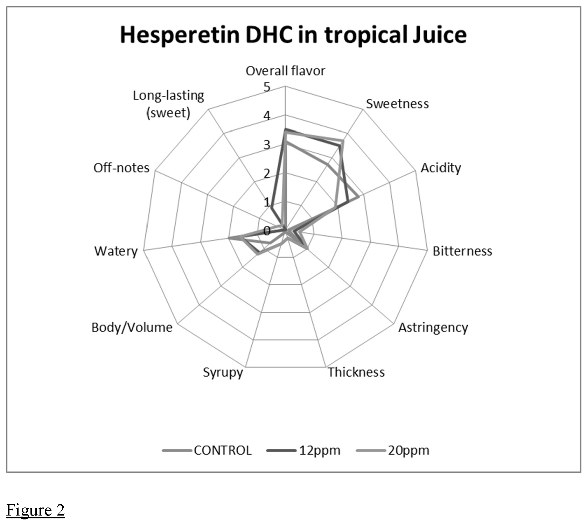

**Figure 2** shows the effect of Hesperetin Dihydrochalcone dosed at 12 ppm and 20 ppm in a tropical juice

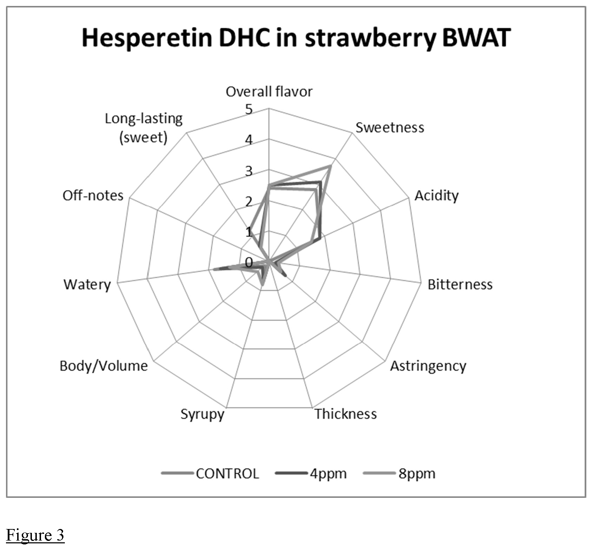

**Figure 3** shows the effect of Hesperetin Dihydrochalcone dosed at 4 ppm and 8 ppm in a strawberry flavored water

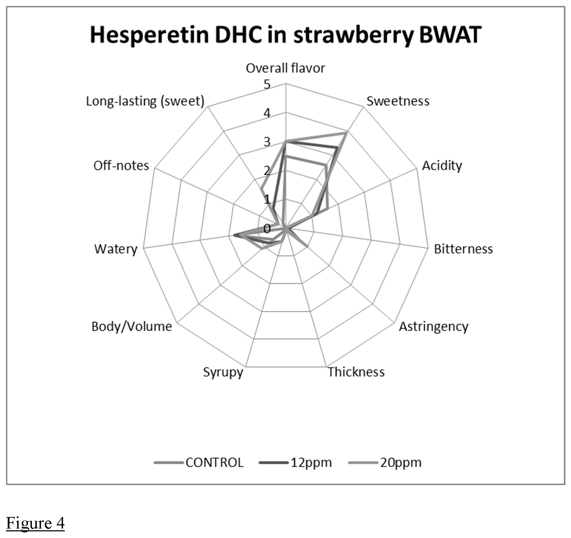

**Figure 4** shows the effect of Hesperetin Dihydrochalcone dosed at 12 ppm and 20 ppm in a strawberry flavored water

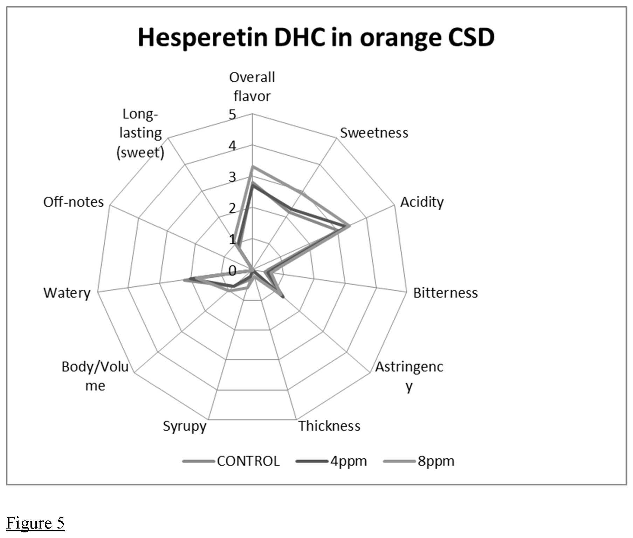

**Figure 5** shows the effect of Hesperetin Dihydrochalcone dosed at 4 ppm and 8 ppm in an orange carbonated soft drink

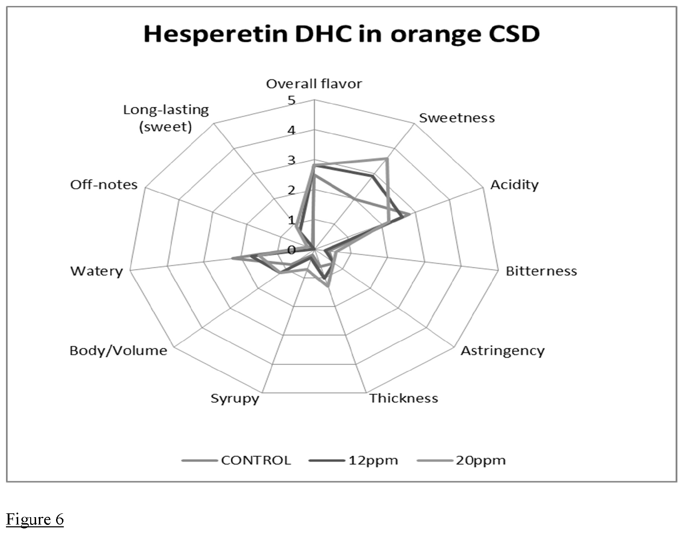

**Figure 6** shows the effect of Hesperetin Dihydrochalcone dosed at 12 ppm and 20 in an orange carbonated soft drink

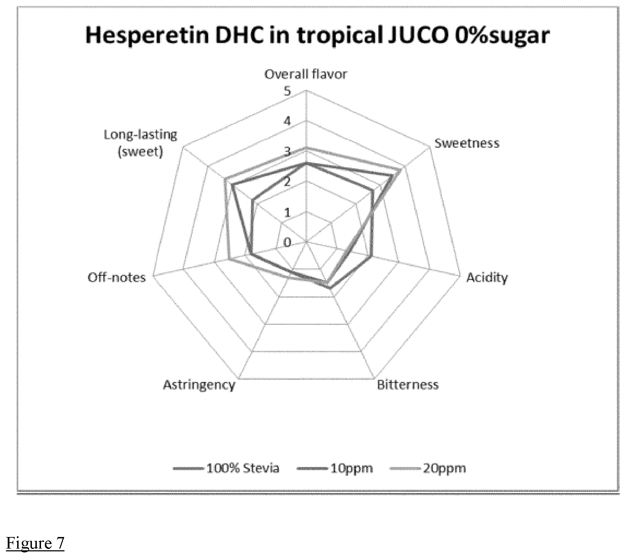

**Figure 7** shows the effect of Hesperetin Dihydrochalcone dosed at 10 ppm and 20 ppm in a stevia sweetened tropical juice

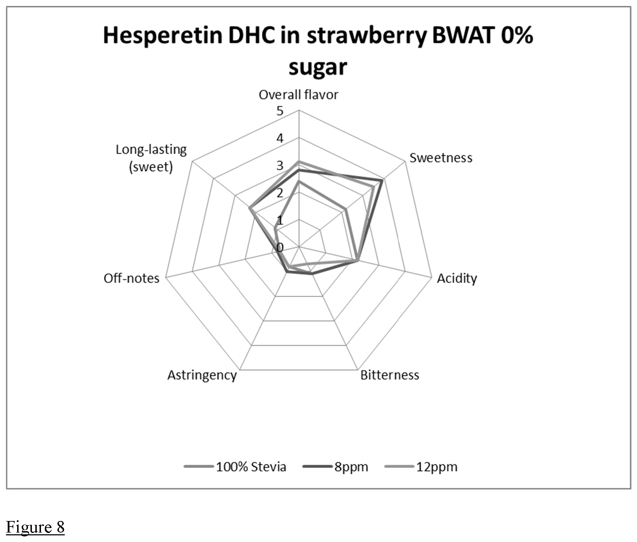

**Figure 8** shows the effect of Hesperetin Dihydrochalcone dosed at 10 ppm and 20 ppm in a stevia sweetened strawberry flavored water

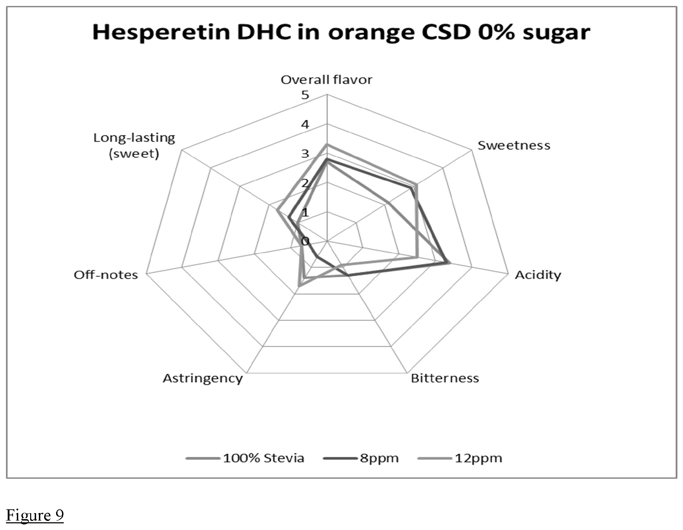

**Figure 9** shows the effect of Hesperetin Dihydrochalcone dosed at 10 ppm and 20 ppm in a stevia sweetened orange carbonated soft drink

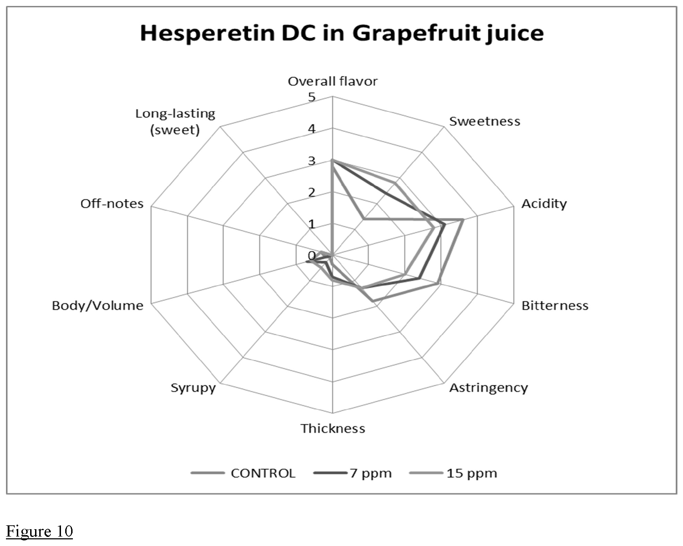

**Figure 10** shows the effect of Hesperetin Dihydrochalcone dosed at 7 ppm and 15 ppm in a grapefruit juice

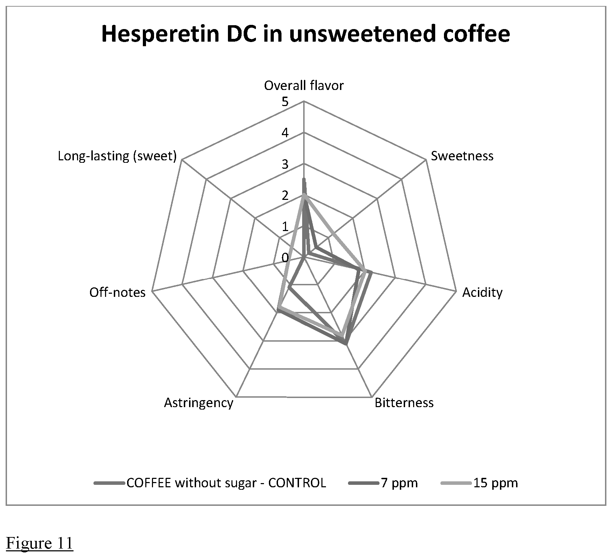

**Figure 11** shows the effect of Hesperetin Dihydrochalcone dosed at 7 ppm and 15 ppm in a sweetened coffee

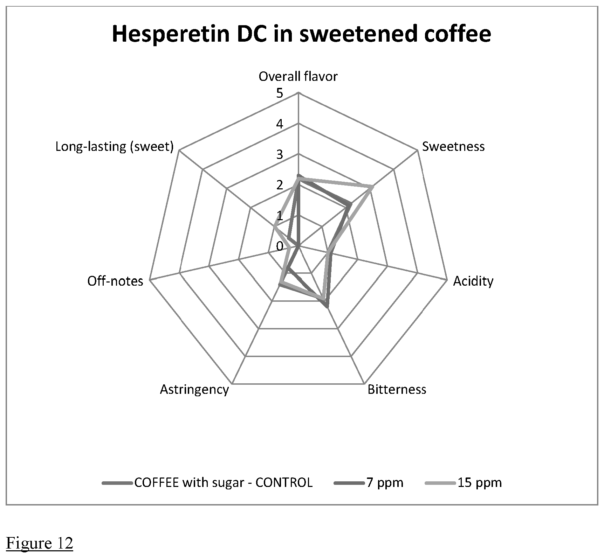

**Figure 12** shows the effect of Hesperetin Dihydrochalcone dosed at 7 ppm and 15 ppm in an unsweetened coffee

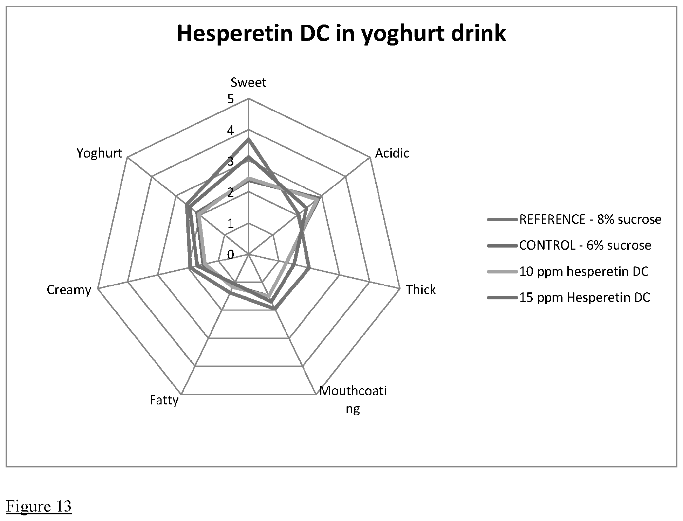

**Figure 13** shows the effect of Hesperetin Dihydrochalcone dosed at 10 ppm and 15 ppm in a yoghurt drink

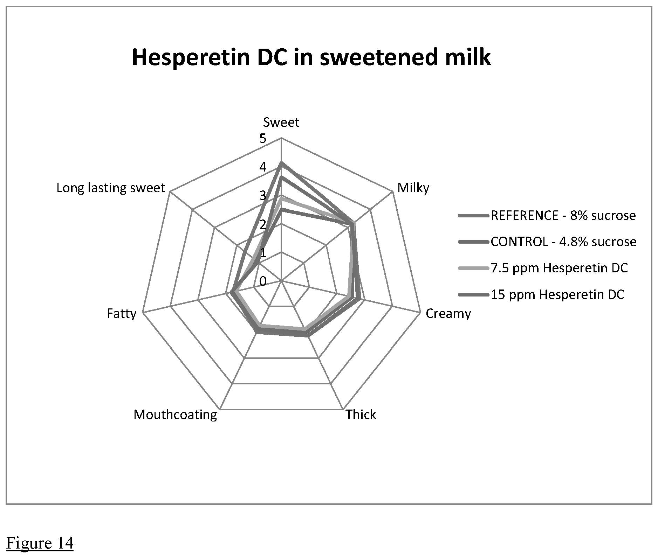

**Figure 14** shows the effect of Hesperetin Dihydrochalcone dosed at 7.5 ppm and 15 ppm in a yoghurt drink

## DETAILED DESCRIPTION

For the descriptions herein and the appended claims, the use of "or" means "and/or" unless stated otherwise. Similarly, "comprise," "comprises," "comprising" "include," "includes," and "including" are interchangeable and not intended to be limiting.

It is to be further understood that where descriptions of various embodiments use the term "comprising," those skilled in the art would understand that in some specific instances, an embodiment can be alternatively described using language "consisting essentially of" or "consisting of."

In one embodiment, Hesperetin Dihydrochalcone is provided in a beverage or food product in an amount of 2 ppm to 20 ppm by weight of the total weight of the beverage or food product, particularly in combination with sucrose or fructose more particularly in combination with 5% sucrose or fructose, by weight of the total weight of the beverage or food product.

In one embodiment, Hesperetin Dihydrochalcone is provided in a beverage or food product in an amount of 4 ppm to 20 ppm by weight of the total weight of the beverage or food product.

In a further embodiment, Hesperetin Dihydrochalcone is provided in a beverage or food product in an amount of 8

ppm to 20 ppm by weight of the total weight of the beverage or food product.

However, when combined with others sweeteners, Hesperetin Dihydrochalcone provides sweetness enhancement to composition comprising a sweetener. In some embodiments, Hesperetin Dihydrochalcone provides a sweetness equivalent to 1-2°brix of sucrose equivalents.

In another embodiment, Hesperetin Dihydrochalcone enhances the overall flavor profile of a beverage or food product, particularly in orange CSD and strawberry flavor bottled water.

In another embodiment, Hesperetin Dihydrochalcone enhances the overall mouthfeel of a beverage or food product.

In another embodiment, the sweetener provided herein is selected from the group consisting common saccharide sweeteners, e.g., sucrose, fructose (e.g., D-fructose),glucose (e.g., D-glucose); sweetener compositions comprising natural sugars, such as corn syrup (including high fructose corn syrup) or other syrups or sweetener concentrates derived from natural fruit and vegetable sources; semisynthetic "sugar alcohol" sweeteners such as erythritol, isomalt, lactitol, mannitol, sorbitol, xylitol, maltodextrin, glycerol, threitol, arabitol, ribitol, and dulcitol; artificial sweeteners such as miraculin, aspartame, superaspartame, saccharin, saccharin-sodium salt, acesulfame-K, cyclamate, sodium cyclamate, and alitame; other sweeteners such as trehalose, melizitose, melibiose, raffinose, palatinose, lactulose, cyclamic acid, mogroside, tagatose (e.g., D-tagatose), maltose, galactose (e.g., D-galactose), L-rhamnose, D-sorbose, maunose (e.g., D-maunose), lactose, L-arabinose,D-ribose, D-glyceraldehyde, curculin, brazzein, mogroside, Neohesperidin dihydrochalcone (NHDC), neotame and other aspartame derivatives, D-tryptophan, D-leucine, D-threonine, glycine, D-asparagine, D-phenylalanine, L-proline, maltitol, hydrogenated glucose syrup (HGS), magap, sucralose, lugduname, sucrononate, sucrooctate, monatin, phyllodulcin, hydrogenated starch hydrolyzate (HSH), stevioside, rebaudioside A, rebaudioside D, rebaudioside M, and other sweet Stevia based glycosides, lo han guo, thaumatin, monellin, carrelameand amd other guanidine-based sweeteners. Particularly, the sweetener is a high potency sweetener, particularly it is selected from the group consisting of saccharin, aspartame, cyclamate, sucralose, saccharine, stevia, rebauasdioside A, neotame, acesulfame K, sucrose, glucose fructose and sorbitol, more particularly it is selected from the group consisting of fructose and stevia.

In a further embodiment the sweetener is selected from the group consisting of sucrose, fructose, and stevia. In a further embodiment, the sweetener comprises a purified stevia extract having a high purity combination of nine sweet steviol glycosides found within the stevia leaf. The purified stevia extract may be represented by high purity combination of nine sweet steviol glycosides found within the stevia leaf wherein Reb A accounts for over half of the final composition (e.g., SG95 sold by PureCircle).

In one embodiment, Hesperetin Dihydrochalcone significantly increases the sweetness intensity of a strawberry flavored bottled water containing 200 ppm of Steviol Glycosides (SG 95 from PureCircle) without significantly impacting any of the other flavor attributes. Moreover, the addition of 20 ppm Hesperetin Dihydrochalcone can maintain the sweetness intensity of a strawberry flavored beverage having a 20 ppm reduced level of SG95.

In another embodiment, 12 ppm Hesperetin Dihydrochalcone significantly increases the sweetness of 200 ppm Steviol Glycosides (SG95 from PureCircle) for example in a Strawberry flavoured bottled water while also increasing the overall mouthfeel intensity, and lingering sweetness intensity.

In another embodiment, 15ppm Hesperetin Dihydrochalcone significantly increases the sweetness of a 6% sucrose yoghurt drink.

In another embodiment, 15ppm Hesperetin Dihydrochalcone significantly increases the sweetness of a sweetened milk (4.8% sucrose added).

The compositions and methods provided herein have use in beverage or food products. When the beverage or food product is a particulate or powdery food, the dry particles may easily be added thereto by dry-mixing. Typical beverage or food products are selected from the group consisting of an instant soup or sauce, a breakfast cereal, a powdered milk, a baby food, a powdered drink, a powdered chocolate drink, a spread, a powdered cereal drink, a chewing gum, an effervescent tablet, a cereal bar, and a chocolate bar. The powdered foods or drinks may be intended to be consumed after reconstitution of the product with water, milk and/or a juice, or another aqueous liquid.

The beverage or food product may be selected from the group consisting of condiments, baked goods, powdery food, bakery filings and Fluid dairy products.

Condiments include, without limitation, ketchup, mayonnaise, salad dressing, Worcestershire sauce, fruit-flavored sauce, chocolate sauce, tomato sauce, chili sauce, and mustard.

Bakery fillings include, without limitation, low or neutral pH fillings, high, medium or low solids fillings, fruit or milk based (pudding type or mousse type) fillings, hot or cold make-up fillings and nonfat to full-fat fillings.

Fluid dairy products include, without limitation, non-frozen, partially frozen and frozen fluid dairy products such as, for example, milks, ice creams, sorbets and yogurts.

Beverage products include, without limitation, carbonated soft drinks, including cola, lemon-lime, root beer, heavy citrus ("dew type"), fruit flavored and cream sodas; powdered soft drinks, as well as liquid concentrates such as fountain syrups and cordials; coffee and coffee-based drinks, coffee substitutes and cereal-based beverages; teas,

including dry mix products as well as ready-to-drink teas (herbal and tealeaf based); fruit and vegetable juices and juice flavored beverages as well as juice drinks, nectars, concentrates, punches and "ades"; sweetened and flavored waters, both carbonated and still; sport/energy/health drinks; alcoholic beverages plus alcohol-free and other low-alcohol products including beer and malt beverages, cider, and wines (still, sparkling, fortified wines and wine coolers); other beverages processed with heating (infusions, pasteurization, ultra high temperature, ohmic heating or commercial aseptic sterilization) and hot-filled packaging; and cold-filled products made through filtration or other preservation techniques. SG95 is a natural, high purity combination of nine sweet steviol glycosides found within the stevia leaf. Reb A accounts for over half of the final composition.

The below examples are illustrative only and are not meant to limit the claims or embodiments described herein.

## EXAMPLES

### Example 1

### Sensory tests in model beverages solutions

Twelve model beverage solutions were prepared and tested. The composition and concentrations of the beverages are set forth in Tables 1-3 (grapefruit juice is a market product bought in a Swiss supermarket as well as the coffee).

| Ingredients | g/L | g/L 30% sugar reduction | g/L |
|---|---|---|---|
| Sugar | 70.55 | 49.39 | 0 |
| SG95 | 0 | 0 | 200ppm |
| Citric acid | 1.75 | 1.75 | 1.75 |
| Ascorbic acid | 0.15 | 0.15 | 0.15 |
| Potassium sorbate | 0.15 | 0.15 | 0.15 |
| Tropical compound 050002 JC20181 | 32.00 | 32.00 | 32.00 |
| Water | 928.40 | 949,56 | 998.95 |
| TOTAL | 1032.86 | 1032.86 | 1032.86 |

Table 1: Application formula used to prepare tropical juice with and without sugar

| Ingredients | g/L | g/L 30% red | g/L |
|---|---|---|---|
| Inverted sugar syrup (73°bx) | 98.94 | 69.26 | 0 |
| SG95 | 0 | 0 | 200ppm |
| Citric acid | 1.28 | 1.28 | 1.28 |
| Sodium citrate | 0.10 | 0.10 | 0.10 |
| Potassium sorbate | 0.18 | 0.18 | 0.18 |
| Strawberry 547072 C | 0.77 | 0.77 | 0.77 |
| Volvic water | 922.00 | 951.68 | 1020.74 |
| TOTAL | 1023.27 | 1023,27 | 1023,27 |

Table 2: Application formula used to prepare strawberry flavored water with and without sugar

| Ingredients | g/L | g/L 30% red | g/L |
|---|---|---|---|
| Sugar | 80.00 | 56 | 0 |
| SG95 | 0 | 0 | 200ppm |
| Citric acid | 2.00 | 2.00 | 2.00 |
| Potassium sorbate | 0.15 | 0.15 | 0.15 |
| Orange FJC Brazil 65°bx | 21.31 | 21.31 | 21.31 |
| Orange flavor 050001 3195846 | 0.20 | 0.20 | 0.20 |
| Water | 155.40 | 179.40 | 235.40 |
| Gaz water | 777.00 | 777.00 | 777.00 |
| TOTAL | 1036.06 | 1036.06 | 1036.06 |

Table 3: Application formula used to prepare orange CSD with and without added sugar

The following observations were made:

1. We observed a positive effect of hesperetin DC on perceived sweetness when dosed at 4ppm and 8ppm in a tropical juice.
2. We observed a positive effect of hesperetin DC on perceived sweetness when dosed at 12ppm and 20ppm. An increase in the overall flavor as well as a decrease on sourness is observedd in presence of Hesperetin DC.
3. We observed a positive effect of hesperetin DC on perceived sweetness when dosed at 4ppm and 8ppm in

strawberry flavored water.

4. We observed an increased sweetness perception when hesperetin DC is dosed at 12ppm and 20ppm in strawberry flavored water.

5. An increased sweetness perception is observedd when hesperetin DC is dosed at 8ppm in an orange carbonated soft drink. A higher overall flavor is also shown at this dosage.

6. We observed an increased sweetness perception when hesperetin DC is dosed at 12ppm and 20ppm in an orange carbonated soft drink.

7. An increased sweetness perception is showed when hesperetin DC is dosed at 10ppm and 20ppm in a 0% sugar tropical juice (sweetened with stevia SG95). A reduction of sourness is also perceived in presence of Hesperetin DC.

8. An increased sweetness perception is showed when hesperetin DC is dosed at 8ppm and 12ppm as well as an increase in overall flavor in a 0% sugar flavored water (sweetened with stevia SG95).

9. We observed a positive effect of hesperetin DC on perceived sweetness when dosed at 8ppm and 12ppm in a tropical juice.

10. We observed an increased sweetness, a decreased perceived sourness and a diminution of bitterness and astringency when hesperetin DC is dosed at 7ppm and 15ppm in a 100% grapefruit juice (market product).

11. We observed a positive effect of hesperetin DC on perceived sweetness when dosed at 15ppm in an unsweetened coffee.

12. We observed an increased sweetness perception when hesperetin DC is dosed at 15ppm in a sweetened coffee.

The present invention is furthermore described by the following items:

**1.** A method of enhancing the sweetness of sweetener in a beverage or food product comprising adding hesperetin Dihydrochalcone to the product in an amount of 2 to 20 ppm by weight of the total weight of the product.

**2.** The method as recited in item 1 wherein the amount of hesperetin Dihydrochalcone provided in the product is from about 4 to about 20 ppm by weight of the total weight of the product.

**3.** The method as recited in item 2 wherein the amount of hesperetin Dihydrochalcone provided in the product is about 15 ppm by weight of the total weight of the product.

**4.** The method as recited in item 1 wherein the sweetener is selected from the group consisting of "Sweeteners" include, but are not limited to the common saccharide sweeteners, e.g., sucrose, fructose (e.g., D-fructose),glucose (e.g., D-glucose), and sweetener compositions comprising natural sugars, such as corn syrup (including high fructose corn syrup) or other syrups or sweetener concentrates derived from natural fruit and vegetable sources, semisynthetic "sugar alcohol" sweeteners such as erythritol, isomalt, lactitol, mannitol, sorbitol, xylitol, maltodextrin, glycerol, threitol, arabitol, ribitol, dulcitol, and the like, and artificial sweeteners such as miraculin, aspartame, superaspartame, saccharin, saccharin-sodium salt, acesulfame-K,cyclamate, sodium cyclamate, and alitame. Sweeteners also include trehalose, melizitose, melibiose, raffinose, palatinose, lactulose, cyclamic acid, mogroside, tagatose (e.g., D-tagatose), maltose, galactose (e.g., D-galactose), L-rhamnose, D-sorbose, maunose (e.g., D-maunose), lactose, L-arabinose,D-ribose, D-glyceraldehyde, curculin, brazzein, mogroside, Neohesperidin dihydrochalcone (NHDC),neotame and other aspartame derivatives, D-tryptophan, D-leucine, D-threonine, glycine, D-asparagine, D-phenylalanine, L-proline, maltitol, hydrogenated glucose syrup (HGS),magap, sucralose, lugduname, sucrononate, sucrooctate, monatin, phyllodulcin, hydrogenated starch hydrolyzate(HSH), stevioside, rebaudioside A and other sweet Stevia based glycosides, lo han guo, thaumatin, monellin, carrelameand other guanidine-based sweeteners.

**5.** A beverage or food product comprising hesperetin Dihydrochalcone in an amount of from 2 to 50 ppm, by weight, of the total weight of the product, and a sweetener.

**6.** The food or beverage as recited in item 5 wherein the sweetener is selected from the group consisting of "Sweeteners" include, but are not limited to the common saccharide sweeteners, e.g., sucrose, fructose (e.g., D-fructose),glucose (e.g., D-glucose), and sweetener compositions comprising natural sugars, such as corn syrup (including high fructose corn syrup) or other syrups or sweetener concentrates derived from natural fruit and vegetable sources, semisynthetic "sugar alcohol" sweeteners such as erythritol, isomalt, lactitol, mannitol, sorbitol, xylitol, maltodextrin, glycerol, threitol, arabitol, ribitol, dulcitol, and the like, and artificial sweeteners such as miraculin, aspartame, superaspartame, saccharin, saccharin-sodium salt, acesulfame-K,cyclamate, sodium cyclamate, and alitame. Sweeteners also include trehalose, melizitose, melibiose, raffinose, palatinose, lactulose, cyclamic acid, mogroside, tagatose (e.g., D-tagatose), maltose, galactose (e.g., D-galactose), L-rhamnose, D-sorbose, maunose (e.g., D-maunose), lactose, L-arabinose,D-ribose, D-glyceraldehyde, curculin, brazzein, mogroside, Neohesperidin dihydrochalcone (NHDC),neotame and other aspartame derivatives, D-tryptophan, D-leucine, D-threonine, glycine, D-asparagine, D-phenylalanine, L-proline, maltitol, hydrogenated glucose syrup (HGS),magap, sucralose, lugduname, sucrononate, sucrooctate, monatin, phyllodulcin, hydrogenated starch hydrolyzate(HSH), stevioside, rebaudioside A and other sweet Stevia based glycosides, lo han guo, thaumatin, monellin, carrelameand other guanidine-based sweeteners.

**7.** The beverage or food product as recited in item 5 wherein the amount of hesperetin Dihydrochalcone provided in the beverage or food product is from about 4 to about 20ppm by weight of the total weight of the beverage or food product.

**8.** The beverage or food product as recited in item 5 wherein the amount of hesperetin Dihydrochalcone provided in the beverage or food product is about 12 ppm by weight of the total weight of the beverage or food product.

**9.** Use of hesperetin Dihydrochalcone in an amount of 2 to 20 ppm by weight of the total weight of a beverage or food product for enhancing the sweetness of a sweetener in the product and/or the overall flavor profile of the product and/or the overall mouthfeel of the product.

**10.** Use according to item 9 wherein the amount of hesperetin Dihydrochalcone provided in the product is from about 4 to about 20 ppm by weight of the total weight of the product.

**11.** Use according to item 10 wherein the amount of hesperetin Dihydrochalcone provided in the product is about 15 ppm by weight of the total weight of the product.

**12.** Use according to item 9 wherein the sweetener is selected from the group consisting of common saccharide sweeteners, e.g., sucrose, fructose (e.g., D-fructose), glucose (e.g., D-glucose), and sweetener compositions comprising natural sugars, such as corn syrup (including high fructose corn syrup) or other syrups or sweetener concentrates derived from natural fruit and vegetable sources, semisynthetic "sugar alcohol" sweeteners such as erythritol, isomalt, lactitol, mannitol, sorbitol, xylitol, maltodextrin, glycerol, threitol, arabitol, ribitol, dulcitol, and the like, and artificial sweeteners such as miraculin, aspartame, superaspartame, saccharin, saccharin-sodium salt, acesulfame-K, cyclamate, sodium cyclamate, and alitame and Sweeteners also include trehalose, melizitose, melibiose, raffinose, palatinose, lactulose, cyclamic acid, mogroside, tagatose (e.g., D-tagatose), maltose, galactose (e.g., D-galactose), L-rhamnose, D-sorbose, maunose (e.g., D-maunose), lactose, L-arabinose, D-ribose, D-glyceraldehyde, curculin, brazzein, mogroside, Neohesperidin dihydrochalcone (NHDC), neotame and other aspartame derivatives, D-tryptophan, D-leucine, D-threonine, glycine, D-asparagine, D-phenylalanine, L-proline, maltitol, hydrogenated glucose syrup (HGS), magap, sucralose, lugduname, sucrononate, sucrooctate, monatin, phyllodulcin, hydrogenated starch hydrolyzate(HSH), stevioside, rebaudioside A and other sweet Stevia based glycosides, lo han guo, thaumatin, monellin, carrelameand other guanidine-based sweeteners.

## Claims

1. Use of hesperetin Dihydrochalcone in an amount of 2 to 20 ppm by weight of the total weight of a beverage or food product for enhancing the sweetness of a sweetener in the product and/or the overall flavor profile of the product and/or the overall mouthfeel of the product.

2. Use according to claim 1 wherein the amount of hesperetin Dihydrochalcone provided in the product is from about 4 to about 20 ppm by weight of the total weight of the product.

3. Use according to any one of claims 1 and 2, wherein the amount of hesperetin Dihydrochalcone provided in the product is from about 8 to about 20 ppm by weight of the total weight of the product.

4. Use according to any one of claims 1 to 3, wherein the amount of hesperetin Dihydrochalcone provided in the product is about 15 ppm by weight of the total weight of the product.

5. Use according to any one of claims 1 to 4, wherein the sweetener is selected from the group consisting of common saccharide sweeteners, e.g., sucrose, fructose (e.g., D-fructose),glucose (e.g., D-glucose), and sweetener compositions comprising natural sugars, such as corn syrup (including high fructose corn syrup) or other syrups or sweetener concentrates derived from natural fruit and vegetable sources, semisynthetic "sugar alcohol" sweeteners such as erythritol, isomalt, lactitol, mannitol, sorbitol, xylitol, maltodextrin, glycerol, threitol, arabitol, ribitol, dulcitol, and the like, and artificial sweeteners such as miraculin, aspartame, superaspartame, saccharin, saccharin-sodium salt, acesulfame-K, cyclamate, sodium cyclamate, and alitame and Sweeteners also include trehalose, melizitose, melibiose, raffinose, palatinose, lactulose, cyclamic acid, mogroside, tagatose (e.g., D-tagatose), maltose, galactose (e.g., D-galactose), L-rhamnose, D-sorbose, maunose (e.g., D-maunose), lactose, L-arabinose,D-ribose, D-glyceraldehyde, curculin, brazzein, mogroside, Neohesperidin dihydrochalcone (NHDC),neotame and other aspartame derivatives, D-tryptophan, D-leucine, D-threonine, glycine, D-asparagine, D-phenylalanine, L-proline, maltitol, hydrogenated glucose syrup (HGS),magap, sucralose, lugduname, sucrononate, sucrooctate, monatin, phyllodulcin, hydrogenated starch hydrolyzate(HSH), stevioside, rebaudioside A and other sweet Stevia based glycosides, lo han guo, thaumatin, monellin, carrelameand other guanidine-based sweeteners.

6. A beverage or food product comprising hesperetin Dihydrochalcone in an amount of from 2 to 50 ppm, by weight, of the

total weight of the product, and a sweetener.

7. The food or beverage as recited in claim 6 wherein the sweetener is selected from the group consisting of common saccharide sweeteners, e.g., sucrose, fructose (e.g., D-fructose), glucose (e.g., D-glucose), and sweetener compositions comprising natural sugars, such as corn syrup (including high fructose corn syrup) or other syrups or sweetener concentrates derived from natural fruit and vegetable sources, semisynthetic "sugar alcohol" sweeteners such as erythritol, isomalt, lactitol, mannitol, sorbitol, xylitol, maltodextrin, glycerol, threitol, arabitol, ribitol, dulcitol, and the like, and artificial sweeteners such as miraculin, aspartame, superaspartame, saccharin, saccharin-sodium salt, acesulfame-K, cyclamate, sodium cyclamate, and alitame. Sweeteners also include trehalose, melizitose, melibiose, raffinose, palatinose, lactulose, cyclamic acid, mogroside, tagatose (e.g., D-tagatose), maltose, galactose (e.g., D-galactose), L-rhamnose, D-sorbose, maunose (e.g., D-maunose), lactose, L-arabinose, D-ribose, D-glyceraldehyde, curculin, brazzein, mogroside, Neohesperidin dihydrochalcone (NHDC), neotame and other aspartame derivatives, D-tryptophan, D-leucine, D-threonine, glycine, D-asparagine, D-phenylalanine, L-proline, maltitol, hydrogenated glucose syrup (HGS), magap, sucralose, lugduname, sucrononate, sucrooctate, monatin, phyllodulcin, hydrogenated starch hydrolyzate(HSH), stevioside, rebaudioside A and other sweet Stevia based glycosides, lo han guo, thaumatin, monellin, carrelameand other guanidine-based sweeteners.

8. The beverage or food product as recited in any one of claims 6 and 7 wherein the amount of hesperetin Dihydrochalcone provided in the beverage or food product is from about 4 to about 20ppm by weight of the total weight of the beverage or food product.

9. The beverage or food product as recited in any one of claims 6 to 8, wherein the amount of hesperetin Dihydrochalcone provided in the beverage or food product is about 12 ppm by weight of the total weight of the beverage or food product.

Hesperetin DHC in tropical JUCO
Overall flavor
Sweetness
Acidity
Bitterness
Astringency
Thickness
Syrupy
Body/Volume
Watery
Off-notes
Long-lasting (sweet)
5
4
3
2
1
0
CONTROL
4ppm
8ppm

Figure 1

Hesperetin DHC in tropical Juice
Overall flavor
Sweetness
Acidity
Bitterness
Astringency
Thickness
Syrupy
Body/Volume
Watery
Off-notes
Long-lasting (sweet)
5
4
3
2
1
0
CONTROL
12ppm
20ppm

Figure 2

Hesperetin DHC in strawberry BWAT
Overall flavor
Sweetness
Acidity
Bitterness
Astringency
Thickness
Syrupy
Body/Volume
Watery
Off-notes
Long-lasting (sweet)
5
4
3
2
1
0
CONTROL
4ppm
8ppm

Figure 3

Hesperetin DHC in strawberry BWAT
Overall flavor
Sweetness
Acidity
Bitterness
Astringency
Thickness
Syrupy
Body/Volume
Watery
Off-notes
Long-lasting (sweet)
0
1
2
3
4
5
CONTROL
12ppm
20ppm

Figure 4

Hesperetin DHC in orange CSD
Overall flavor
Sweetness
Acidity
Bitterness
Astringency
Thickness
Syrupy
Body/Volume
Watery
Off-notes
Long-lasting (sweet)
0
1
2
3
4
5
CONTROL
4ppm
8ppm

Figure 5

Hesperetin DHC in orange CSD
Overall flavor
Sweetness
Acidity
Bitterness
Astringency
Thickness
Syrupy
Body/Volume
Watery
Off-notes
Long-lasting (sweet)
5
4
3
2
1
0
CONTROL
12ppm
20ppm

Figure 6

Hesperetin DHC in tropical JUCO 0%sugar
Overall flavor
5
4
3
2
1
0
Sweetness
Acidity
Bitterness
Astringency
Off-notes
Long-lasting (sweet)
100% Stevia
10ppm
20ppm

Figure 7

Hesperetin DHC in strawberry BWAT 0% sugar
Overall flavor
5
4
3
2
1
0
Sweetness
Acidity
Bitterness
Astringency
Off-notes
Long-lasting (sweet)
100% Stevia
8ppm
12ppm

Figure 8

Hesperetin DHC in orange CSD 0% sugar
Overall flavor
Sweetness
Acidity
Bitterness
Astringency
Off-notes
Long-lasting (sweet)
5
4
3
2
1
0
100% Stevia
8ppm
12ppm

Figure 9

Hesperetin DC in Grapefruit juice
Overall flavor
Sweetness
Acidity
Bitterness
Astringency
Thickness
Syrupy
Body/Volume
Off-notes
Long-lasting (sweet)
0
1
2
3
4
5
CONTROL
7 ppm
15 ppm

Figure 10

Hesperetin DC in unsweetened coffee
Overall flavor
5
4
3
2
1
0
Sweetness
Acidity
Bitterness
Astringency
Off-notes
Long-lasting (sweet)
COFFEE without sugar - CONTROL
7 ppm
15 ppm

Figure 11

Hesperetin DC in sweetened coffee
Overall flavor
5
4
3
2
1
0
Sweetness
Acidity
Bitterness
Astringency
Off-notes
Long-lasting (sweet)
COFFEE with sugar - CONTROL
7 ppm
15 ppm

Figure 12

Hesperetin DC in yoghurt drink
Sweet
5
4
3
2
1
0
Acidic
Thick
Mouthcoati
ng
Fatty
Creamy
Yoghurt
REFERENCE - 8% sucrose
CONTROL - 6% sucrose
10 ppm hesperetin DC
15 ppm Hesperetin DC

Figure 13

Hesperetin DC in sweetened milk
Sweet
5
4
3
2
1
0
Milky
Creamy
Thick
Mouthcoating
Fatty
Long lasting sweet
REFERENCE - 8% sucrose
CONTROL - 4.8% sucrose
7.5 ppm Hesperetin DC
15 ppm Hesperetin DC

Figure 14